# EUROPÄISCHE PATENTSCHRIFT

(11) **EP 3 215 588 B1**
(45) Veröffentlichungstag und Bekanntmachung des Hinweises auf die Patenterteilung: **28.08.2019**
(21) Anmeldenummer: 15787206.0
(22) Anmeldetag: 29.10.2015
(51) Int. Cl.: C10G 1/00, C10G 1/02, C10G 9/00

(54) **VERFAHREN ZUR UMSETZUNG VON BIOMASSE ZU FLÜSSIGEN UND/ODER GASFÖRMIGEN ENERGIETRÄGERN**
METHOD FOR THE CONVERSION OF BIOMASS TO LIQUID AND/OR GASEOUS ENERGY CARRIERS
PROCÉDÉ DE CONVERSION DE BIOMASSE EN SUPPORTS D'ÉNERGIE LIQUIDES ET/OU GAZEUX

(30) Priorität: 05.11.2014 EP 14191820
(43) Veröffentlichungstag der Anmeldung: 13.09.2017
(73) Patentinhaber: BDI Holding GmbH, 8074 Grambach (AT)
(72) Erfinder: PUCHER, Peter, A-8042 Graz (AT)
(74) Vertreter: Schwarz & Partner Patentanwälte OG
(86) Internationale Anmeldenummer: PCT/EP2015/075151
(87) Internationale Veröffentlichungsnummer: WO 2016/071208

(56) Entgegenhaltungen:
- WO-A1-2008/034596
- WO-A1-2008/119525
- WO-A1-2010/031803
- US-A1- 2011 099 888
- US-A1- 2012 271 074

## Beschreibung

Die vorliegende Erfindung betrifft ein Verfahren zur Pyrolyse gemäß Anspruch 1.

Verfahren zur Pyrolyse von Biomasse in Gegenwart eines Wärmeträgers sind bekannt.

Die Pyrolyse kann dabei mit festen Wärmeträgern (z.B. mit Sand in Form einer Flash-Pyrolyse) oder flüssigen Wärmeträgern durchgeführt werden. Letztere Alternative wird als Flüssigphasenpyrolyse bezeichnet.

Eine wichtige Variante der Flüssigphasenpyrolyse besteht darin, als Wärmeträger ein Schweröl zu verwenden. Bei der Pyrolyse der Biomasse kommt es in dieser Variante gleichzeitig zu einem thermischen Cracken des Schweröls unter zusätzlicher Gewinnung von Brenn- bzw Treibstoffen.

Die WO 2010/031803 A beschreibt ein Verfahren zur Flüssigphasenpyrolyse von kohlenstoffwasserstoffhältiger Biomasse mit Schweröl als Wärmeträger, wobei eine kohlenwasserstoffhältige Biomasse eingesetzt werden soll, deren Feuchtigkeitsgehalt maximal 1,0 Gew.% bezogen auf die Biomasse beträgt. Gemäß der WO 2010/31803 sowie auch der WO 2008/034596 A1 und der WO 2008/11925 A1 kann die Biomasse vor der Pyrolyse mit dem Wärmeträger (Schweröl), also mit jener Flüssigkeit, mit welcher auch die Pyrolyse durchgeführt wird, imprägniert werden.

Die AT 508469 B1 beschreibt eine Flüssigphasenpyrolyse von Biomasse unter Zugabe eines biologischen Katalysators, bei dem es sich um einen pflanzlichen Reststoff handelt.

Die DE 10 215679 A1 beschreibt ein Verfahren der Flüssigphasenpyrolyse in einem Temperaturbereich von 350-500°C und bei einem Systemdruck bis 100bar. Als Kalalysatoren werden feste Zeolithe und unterstützend alkalische Chemikalien becshrieben.

Die US 2009/0299112 A1 beschreibt die Verarbeitung eines biogenen Rohstoffes mit einem Kohlenwasserstoffes mitels Hydrierung unter Hochdruckbedingungen.

Weitere Verfahren sind beispielsweise aus der US 4,266,083, der US 4,941,966, der US 2007/0261996, der US 2012/271074 und der EP 0 027 962 A2 bekannt.

Insbesondere bei der Flüssigphasenpyrolyse von Biomasse, d.h. der Pyrolyse von Biomasse in einem flüssigen Trägermedium, kommt es im Temperaturbereich von 300 - 450°C zu einer Umsetzung von fester Biomasse zu einer flüssigen, einer festen und einer gasförmigen Phase. Wird als Trägermedium ein Kohlenwasserstoff - z.B. ein Zwischenprodukt der Raffinerie wie Vakuumgasöl - eingesetzt, besteht die flüssige Phase aus einer hydrophoben Kohlenwasserstoff-Fraktion sowie einer hydrophilen Pyrolyseöl-Fraktion.

Ziel ist es dabei, möglichst viel Energie der Biomasse z.B. durch Transfer von biogenem Kohlenstoff in die flüssige und/oder gasförmige Kohlenwasserstoff-Fraktion zu bekommen. Die Transfer-Rate steigt mit steigender Pyrolysetemperatur und liegt aber generell unter 20-30 Gew.% der eingesetzten Biomasse. Eine weitere Verbesserung der Umsetzung von Biomasse in die gewünschte Fraktion ist daher wünschenswert.

In der Literatur wird dazu einerseits eine Temperaturerhöhung vorgeschlagen. Insbesondere bei einer Flüssigphasenpyrolyse ist die Temperaturerhöhung aber durch den Siedeverlauf der Trägerflüssigkeit physikalisch durch den vorherrschenden Systemdruck begrenzt. Bei einem Überdruck von typischerweise <0,5bar ist die Verfahrenstemperatur somit physikalisch auf max 450°C begrenzt. Mit steigender Temperatur steigt auch der nötige Energieeintrag und erhöhen sich die Kosten für den Betrieb der Anlage.

Alternativ wird in der Literatur der Einsatz von zeolith-basierten Katalysatoren berichtet, die eine höhere Selektivität bringen sollten. Der Einsatz von festen Katalysatoren hat allerdings im Laborversuch keine entsprechende Wirkung gezeigt. Zudem würde sich dadurch entweder die Nachnutzung der verbleibenden Kohle verschlechtern oder aber eine aufwändige Abtrennung der Kohle vom Katalysator erfordern.

Die vorliegende Erfindung stellt sich zur Aufgabe, bei einem gattungsgemäßen Verfahren die Rate des Transfers von biogenem Kohlenstoff in die flüssige Kohlenwasserstoff-Fraktion zu erhöhen.

Diese Aufgabe wird durch ein Verfahren zur Pyrolyse gemäß Anspruch 1 gelöst.

### Kurze Beschreibung der Figuren

Figur 1 zeigt ein Verfahrensschema einer Ausführungsform des erfindungsgemäßen Verfahrens.
Figur 2 und 3 zeigen die Ergebnisse der Durchführung zweier Vergleichsversuche und der Durchführung des erfindungsgemäßen Verfahrens in einem Laborsystem.
Figur 4 und 5 zeigen die Ergebnisse der Durchführung eines Vergleichsversuches und der Durchführung des erfindungsgemäßen Verfahrens in einer kontinuierlichen Pilotanlage.
Figur 6 zeigt den Vergleich von Siedelinien für die in Beispiel 2 eingesetzten Kohlenwasserstoffe zur Imprägnierung der Biomasse.

### Detaillierte Beschreibung der Erfindung

Es wurde gefunden, dass durch Imprägnierung der Biomasse mit einer leichtflüchtigen nichtwässerigen Flüssigkeit vor der Mischung mit dem Wärmeträger und damit vor der eigentlichen Pyrolyse die Reaktionsvorgänge an den Partikeln der Biomasse derartig positiv beeinflusst werden können, dass es bei vergleichbarer Reaktionstemperatur zu einer verbesserten Umsetzung hin zur flüssigen und/oder gasförmigen Kohlenwasserstoff-Phase kommt.

Durch verkürzte Verweilzeit der Reaktionsprodukte in der heißen, reaktiven Phase (= Flüssigbad) können unerwünschte Folgereaktionen unterdrückt werden. Aus der Literatur ist bekannt, dass bei der trockenen Flash-Pyrolyse kürzere Verweilzeiten zu erhöhten Umsätzen in Richtung Flüssigprodukt führen. Insbesondere in der Flüssigphasenpyrolyse liegt aber die Aufheizdauer des Partikels im Minutenbereich und lässt sich auch durch optimale Strömungsverhältnisse nicht wesentlich beschleunigen.

Es wurde nunmehr gefunden, dass durch die Imprägnierung mit einer bei Reaktionsbedingungen rasch verdampfenden Flüssigkeit (im Unterschied zum Wärmeträger, der bei Reaktionstemperatur im wesentlichen nicht verdampft) die lokalen Strömungs- und Stoffaustausch-Bedingungen stark verbessert und die Umsetzung beschleunigt wird. Ein weiterer positiver Effekt ist die durch die Verdampfung der Flüssigkeit verbesserte Mitnahme biogener Komponenten aus dem umliegenden Trägermedium, wodurch diese Komponenten eventuell stattfindenden Verkokungsreaktionen nicht mehr zur Verfügung stehen und ein größeres Konzentrationsgefälle zwischen Biomasse-Partikel und Trägermedium entsteht. Dadurch wird abermals der Stoffaustausch beschleunigt und die Reaktion in die gewünschte Richtung positiv beeinflusst. Als Folge verbleibt nach Abschluss der Pyrolyse weniger fester Rückstand (Kohle) der Biomasse.

Erfindungsgemäß wird die kohlenwasserstoffhältige Biomasse vor der Mischung mit dem Wärmeträger mit der leichtflüchtigen Flüssigkeit imprägniert. Bevorzugt wird dabei die Biomasse in einem ersten Schritt mit der leichtflüchtigen Flüssigkeit kontinuierlich getränkt, der Überschuss wird abgetropft, und die imprägnierte Biomasse wird kontinuierlich dem Pyrolyseschritt zugeführt.

Damit werden die Poren der Biomasse mit der Flüssigkeit gefüllt. Die imprägnierte Biomasse wird mit dem gegenüber den hohen Pyrolysetemperaturen im wesentlichen beständigen Wärmeträger gemischt, und bei Erreichen der Pyrolysetemperatur findet ein schlagartiges Verdampfen der leichtflüchtigen Flüssigkeit statt, und es kommt zu einem Steam-Explosion-Effekt in den Poren.

Das Masseverhältnis der leichtflüchtigen Flüssigkeit zur Biomasse beträgt dabei bevorzugt 1,5 zu 1 oder weniger, besonders bevorzugt 1:1 oder weniger, bezogen auf die Masse der trockenen Biomasse.

Die leichtflüchtige Flüssigkeit weist ein Siedeverhalten auf, wonach das Siedeende (95% verdampft) kleiner oder maximal gleich als die Temperatur des Pyrolyseschrittes ist, sodass die leichtflüchtige Flüssigkeit bei der Temperatur des Pyrolyseschrittes im wesentlichen vollständig verdampft.

Bevorzugt weist die leichtflüchtige Flüssigkeit ein Siedeende (95%) von 380°C oder weniger (in Analogie zu EN590) auf.

Besonders bevorzugt ist die leichtflüchtige Flüssigkeit ein Kohlenwasserstoffgemisch mit einem Gehalt an Aromaten von 1% oder mehr.

Insbesondere kann die leichtflüchtige Flüssigkeit aus der Gruppe bestehend aus leichtem Gasöl (LCO oder LGO), Diesel, Benzin und Mischungen daraus ausgewählt sein. Unter leichtem Gasöl versteht der Fachmann ein Vorprodukt von Mitteldestillaten wie Dieselkraftstoff und Heizöl Extraleicht, das direkt aus der Erdölfraktionierung stammt und dessen Siedetemperatur zwischen 190 und 400 °C liegt.

Besonders bevorzugt wird als leichtflüchtige Flüssigkeit ein Raffinerie-Zwischenprodukt eingesetzt.

Setzt man ein leichtflüchtiges Zwischenprodukt der Raffinerie ein (z.B. LCO, Rohdiesel (Leichtes Gasöl LGO), Rohbenzin) so kann man bewusst den biogenen Anteil in einem gewünschte Siedebereich wie z.B. bevorzugt in Richtung Diesel, in Richtung Kerosin oder in Richtung Benzin beeinflussen und gleichzeitig den Transfer von biogenem Kohlenstoff in die flüssige Phase verbessern. Im Idealfall können so Fraktionen aus dem Refiningbereich eine Anwendung erfahren, für die sie davor nicht geeignet waren (z.B. eine Verwendung von LCO in der Treibstoff-Fraktion).

Die bei der Pyrolyse gebildeten Gase können in an sich bekannter Weise entfernt und zur Gewinnung der flüssigen Energieträger kondensiert bzw. weiter in die gewünschten Fraktionen aufgetrennt werden.

Das Pyrolyseverfahren wird bei einem Überdruck von 0,5 bar oder weniger durchgeführt.

Erfindungsgemäß wird die Pyrolyse in Form einer Flüssigphasenpyrolyse durchgeführt. Die gerade bei einer Pyrolyse von Biomasse in Form einer Flüssigphasenpyrolyse auftretenden Probleme wurden bereits weiter oben diskutiert.

Erfindungsgemäß wird als Wärmeträger ein Schweröl, insbesondere Vakuumgasöl, eingesetzt und wird somit eine Flüssigphasenpyrolyse unter gleichzeitigem thermischen Cracken des Schweröles durchgeführt.

Typischerweise wird in dieser Ausführungsform der Pyrolyseschritt des erfindungsgemäßen Verfahrens bei Temperaturen von 300-450°C und einem Überdruck von maximal 0,5 bar durchgeführt. Das Mengenverhältnis zwischen Biomasse und Schweröl liegt typischerweise im Bereich 1:2.

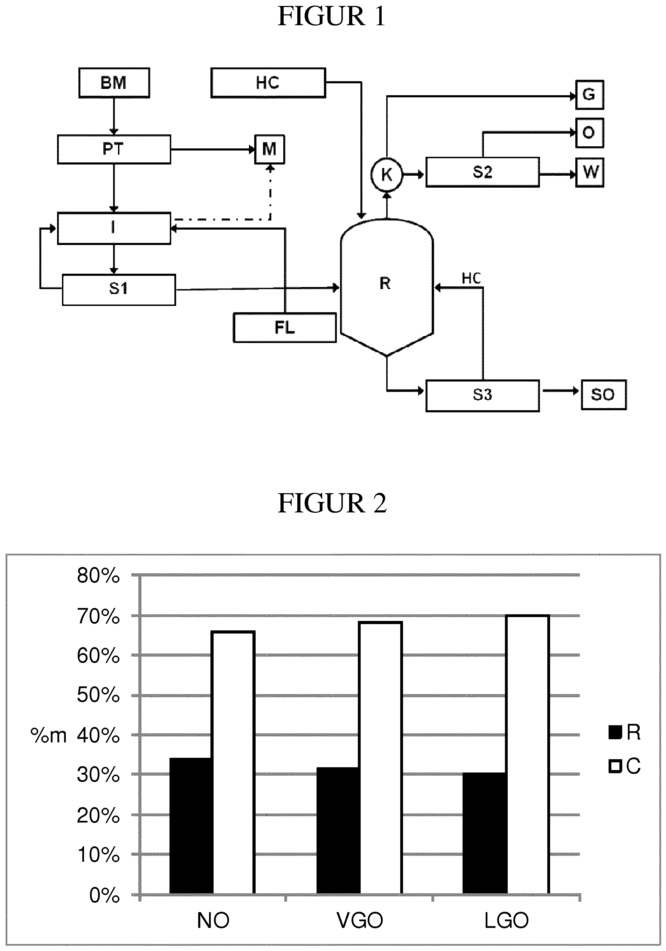

Im Folgenden werden bevorzugte Ausführungsformen der Erfindung anhand der Figuren sowie der Ausführungsbeispiele näher erläutert:
Gemäß Figur 1 wird eine gegebenenfalls feuchte kohlenstoffwasserhältige Biomasse BM mechanisch und/oder thermisch vorbehandelt (PT). Beispielsweise kann in der Vorbehandlung vorhandende Feuchtigkeit (M) abgetrennt werden.

In der in Figur 1 gezeigten bevorzugten Ausführungsform ist anschließend eine Imprägnierung I der vorbehandelten Biomasse mit einer leichflüchtigen Flüssigkeit FL vorgesehen. Auch in diesem Schritt kann durch die Imprägnierung Feuchtigkeit M aus der Biomasse abgetrennt werden. In einem ersten Separator S1 wird überschüssige Flüssigkeit FL aus der Biomasse abgetrennt und wieder zum Imprägnierungsschritt I zurückgeführt.

Die imprägnierte Biomasse wird kontinuierlich einem Reaktor R zugeführt. Ebenfalls dem Reaktor zugeführt wird ein Wärmeträger HC, in der bevorzugten Ausführungsform der Erfindung ein Schweröl. Im Reaktor R wird auf an sich bekannte Weise bei Temperaturen im Bereich von typischerweise 300°C bis 550°C und geringem Überdruck (z.B. bis 450°C und bei maximal 0,5 bar Überdruck) eine Pyrolyse durchgeführt, wobei die in den Poren der Biomasse befindliche leichtflüchtige Flüssigkeit schlagartig entweicht. Die Brüden des Reaktors gelangen in einen Kondensator K. Gasförmige Bestandteile werden als Gas G gesammelt. Die kondensierten Bestandteile gelangen in einen zweiten Separator S2 und werden dort in ölige Fraktionen O und wässerige Fraktionen W separiert.

Das Bodenprodukt des Reaktors R wird in einem dritten Separator S3 in feste Produkte (SO) und Wärmeträger aufgetrennt, wobei Letzteres wieder als Wärmeträger HC dem Reaktor R zugeführt werden.

### Beispiel 1:

Es wurde ein Laborversuch unter Verwendung von Fichtenholz als Biomasse mit Vakuumgasöl als Trägermedium bei 370°C Reaktionstemperatur und etwa 0,05 bar Überdruck durchgeführt. Als Reaktoreinheit wurde ein von außen beheizter Rührkessel im Labormaßstab mit anschließender Kondensatoreinheit eingesetzt.

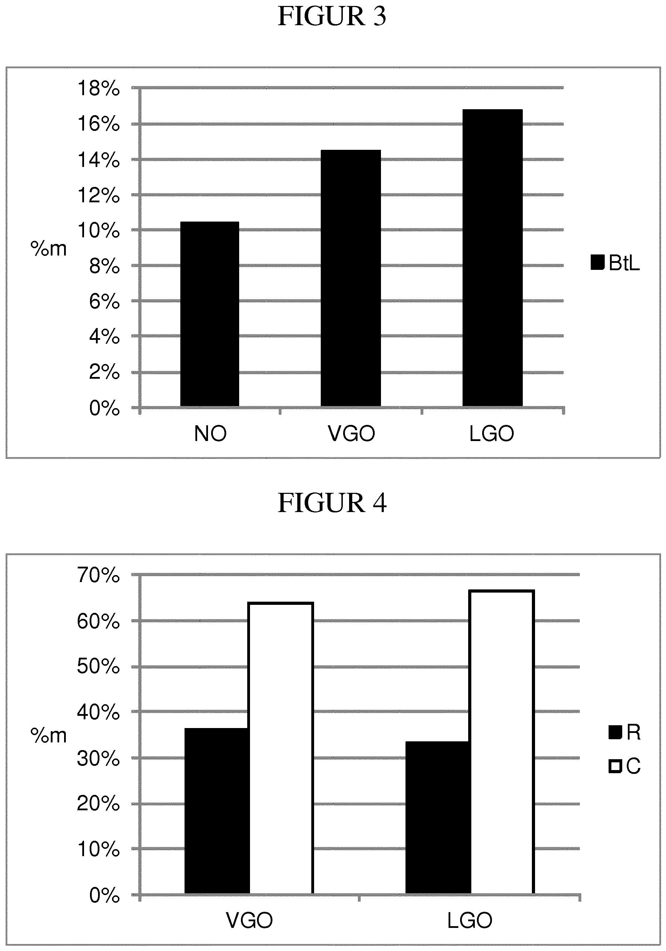

Für einen ersten Vergleichsversuch (in den Figuren 2 und 3 mit "NO" bezeichnet) wurden ca. 100g Holz vorgetrocknet und konventionell ohne vorherige Imprägnierung dem Laborreaktor mit Vakuumgasöl als Trägermedium (Verhältnis Vakuumgasöl zu Biomasse 5:1) zugeführt. Die entstehenden flüssigen und festen Produkte wurden nach Abschluss separiert und gewogen. Die entstandenen noch kondensierbaren Gase wurden aus einer Massendifferenz zur eingesetzten Biomasse ermittelt. Es entstanden als Pyrolyseprodukte feste Kohle, flüssiges, nicht wassermischbares Pyrolyseöl mit Reaktionswasser sowie eine kohlenwasserstoff-lösliche flüssige Produktfraktion.

Als weiterer Vergleichsversuch (in den Figuren 2 und 3 mit "VGO" bezeichnet) wurde trockenes Fichtenholz im Massenverhältnis 1:1 mit Vakuumgasöl bei rund 60°C imprägniert und im Anschluss dem Laborreaktor zugeführt. Die entstehenden flüssigen und festen Produkte wurden nach Abschluss separiert und gewogen. Die entstandenen noch kondensierbaren Gase wurden aus einer Massendifferenz zur eingesetzten Biomasse ermittelt.

Beim erfindungsgemäßen Versuch (in den Figuren 2 und 3 mit "LGO" bezeichnet) wurde die Biomasse getrocknet, anschließend mit Diesel-Kraftstoff imprägniert (ca. Masseverhältnis 1:1) und wie in den Vergleichsversuchen im Flüssigphasenreaktor mit Vakumgasöl behandelt.

Das Ergebnis zeigt beim erfindungsgemäßen Verfahren deutlich weniger Kohlebildung (R), und folglich mehr Massentransfer der festen Biomasse in die gewünschten flüssigen und gasförmigen Fraktionen (C).

Noch deutlicher fällt das Ergebnis bei der Betrachtung des Massentransfers von fester Biomasse in die Kohlenwasserstoff-Fraktion aus. Durch den erfindungsgemäßen Einsatz eines leichtsiedenden Kohlenwasserstoffes (LGO) ließ sich die Umsetzung von rund 10 Gew.% auf nahezu 17 Gew.% steigern. Der Einsatz eines schwersiedenden Kohlenwasserstoffes zur Imprägnierung (VGO) erreichte dabei nur etwa 14 Gew.% Umsatz. Der erfindungsgemäße Einsatz der leichtsiedenden Flüssigkeit (LGO) führte also zu 16% Steigerung im Vergleich zum Einsatz einer schwersiedenden Flüssigkeit (VGO).

Figur 2 zeigt die Massenumsetzung von fester Biomasse zu flüssigen wie gasförmigen Produkten (C) und verbleibendem Feststoff (R) aus Beispiel 1. Links: Vergleichsversuch ohne Imprägnierung (NO). Mitte: Vergleichsversuch mit einem hochsiedendem Vakuumgasöl (VGO). Rechts: Erfindungsgemäßer Versuch mit leichtsiedenden Gasöl (LGO).

Figur 3 zeigt den Massentransfer ("BtL") von fester Biomasse zur Kohlenwasserstoff-Fraktion - also den Massenanteil verflüssigter Biomasse, der mit Kohlenwasserstoffen mischbar ist - aus Beispiel 1. Links: Vergleichsversuch ohne Imprägnierung (NO). Mitte: Vergleichsversuch mit einem hochsiedenden Vakuumgasöl (VGO). Rechts: Erfindungsgemäßer Versuch mit leichtsiedendem Gasöl (LGO).

### Beispiel 2:

In einer kontinuierlichen Pilotanlage wurden rund 60kg/h trockenes Fichtenholz einer Pyrolyse bei rund 375°C unterzogen. Dabei wurde Vakuumgasöl als Wärmeträgermedium im Verhältnis von ca. 4:1 zur Biomasse eingesetzt. Die entstehenden flüssigen wie festen Pyrolyseprodukte wurden in ihrem Massenstrom erfasst und mittels der Radiocarbon-Methode (C14) auf ihren biogenen Kohlenstoff-Gehalt untersucht.

Als Vergleichsversuch wurde zunächst die Biomasse mit Vakuumgasöl (VGO) bei rund 150°C imprägniert (Massenverhältnis rund 1:1) und anschließend einem Pyrolyseschritt unterzogen. Die entstehende Menge an festem Rückstand (R) als Kohle wurde bestimmt und ihr Gehalt an biogenem Kohlenstoff über C14-Messung nachgewiesen. Auf diese Weise konnte eine Umsetzung der festen Biomasse zu flüssigen wie gasförmigen Produkten von rund 64% bzw. ein Transfer von biogenem Kohlenstoff zu flüssigen wie gasförmigen Produkten von 57% festgestellt werden.

In einem erfindungsgemäßen Versuch wurde nun die Biomasse mit leichtem Gasöl (LGO) bei rund 120°C imprägniert (Massenverhältnis rund 1:1) und anschließend einem Pyrolyseschritt unterzogen. Die entstehende Menge an festem Rückstand (R) als Kohle wurde bestimmt und ihr Gehalt an biogenem Kohlenstoff über C14-Messung nachgewiesen. Auf diese Weise konnte eine Umsetzung der festen Biomasse zu flüssigen wie gasförmigen Produkten von rund 67% bzw. ein Transfer von biogenem Kohlenstoff zu flüssigen wie gasförmigen Produkten von 61% festgestellt werden. Durch den erfindungsgemäßen Einsatz einer leichtflüchtigen Flüssigkeit konnte also der Umsatz der Pyrolyse von fester Biomasse zu den gewünschten Produkten auch im kontinuierlichen Pilotbetrieb nachweislich gesteigert werden.

Figur 4 zeigt die Massenumsetzung von fester Biomasse zu flüssigen wie gasförmigen Produkten (C) und verbleibendem Feststoff (R) aus Beispiel 2. Links: Vergleichsversuch mit einem hochsiedenden Vakuumgasöl (VGO). Rechts: Erfindungsgemäßer Versuch mit leichtsiedendem Gasöl (LGO).

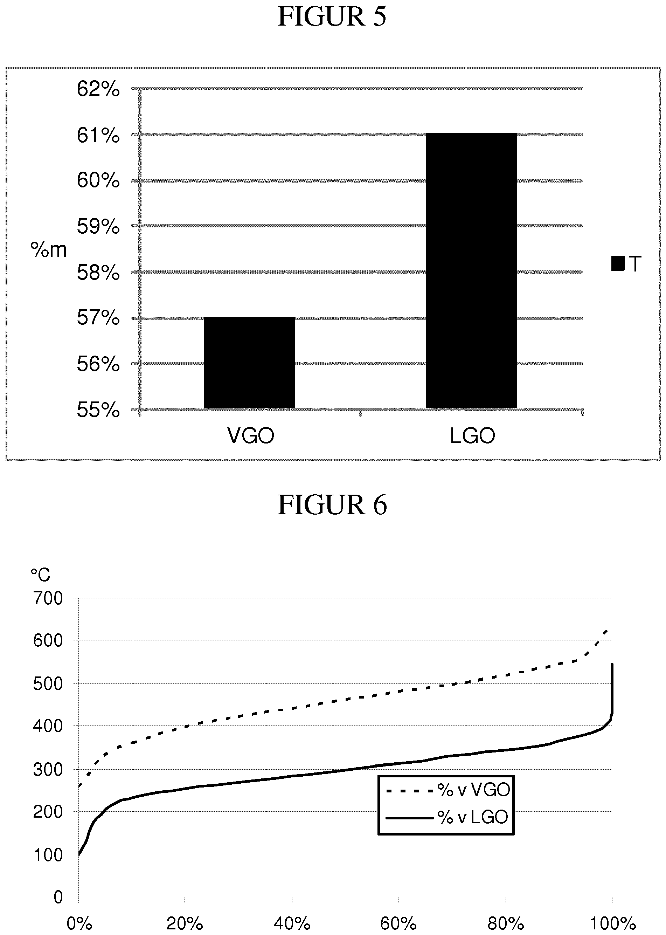

Figur 5 zeigt den Massentransfer (T) von biogenem Kohlenstoff zu flüssigen wie gasförmigen Fraktionen aus Beispiel 2. Links: Vergleichsversuch mit einem hochsiedenden Vakuumgasöl (VGO). Rechts: Erfindungsgemäßer Versuch mit leichtsiedendem Gasöl (LGO).

Figur 6 zeigt die Siedelinien der in Beispiel 2 eingesetzten Kohlenwasserstoffe zur Imprägnierung der Biomasse: Oben: schwersiedendes Vakuumgasöl (VGO) Unten: leichtsiedendes Gasöl (LGO).

## Patentansprüche

1. Verfahren zur Pyrolyse von kohlenwasserstoffhaltiger fester Biomasse zur Gewinnung von flüssigen und/oder gasförmigen Energieträgern in Gegenwart eines Wärmeträgers, indem ein Gemisch aus Wärmeträger und der Biomasse bis zur Pyrolyse der Biomasse erhitzt wird, wobei die Pyrolyse in Form einer Flüssigphasenpyrolyse durchgeführt wird und als Wärmeträger ein Schweröl eingesetzt wird, **dadurch gekennzeichnet, dass** die Biomasse vor der Mischung mit dem Wärmeträger mit einer leichtflüchtigen nichtwässerigen Flüssigkeit imprägniert wird, wobei die leichtflüchtige Flüssigkeit ein Siedeende (95%) von kleiner oder maximal gleich als die Temperatur des Pyrolyseschrittes aufweist und die Pyrolyse bei einem Überdruck von 0,5 bar oder weniger durchgeführt wird, wobei ein Siedeende (95%) die Temperatur angibt, bei der 95% der leichtflüchtigen Flüssigkeit verdampft ist.

2. Verfahren gemäß Anspruch 1, **dadurch gekennzeichnet, dass** die leichtflüchtige Flüssigkeit ein Siedeende (95%) von 380°C oder weniger aufweist.

3. Verfahren gemäß einem der vorherigen Ansprüche, **dadurch gekennzeichnet, dass** die leichtflüchtige Flüssigkeit ein Kohlenwasserstoffgemisch mit einem Gehalt an Aromaten von 1% oder mehr ist.

4. Verfahren gemäß Anspruch 3, **dadurch gekennzeichnet, dass** die leichtflüchtige Flüssigkeit aus der Gruppe bestehend aus Gasöl (LCO/LGO), Diesel, Benzin und Mischungen daraus ausgewählt ist.

5. Verfahren gemäß Anspruch 4, **dadurch gekennzeichnet, dass** als leichtflüchtige Flüssigkeit ein Raffinerie-Zwischenprodukt eingesetzt wird.

6. Verfahren gemäß einem der vorherigen Ansprüche, **dadurch gekennzeichnet, dass** das Masseverhältnis der leichtflüchtigen Flüssigkeit zur Biomasse 1,5 zu 1 oder weniger, bevorzugt 1:1 oder weniger, bezogen auf die Masse der trockenen Biomasse, beträgt.

7. Verfahren gemäß einem der vorherigen Ansprüche, **dadurch gekennzeichnet, dass** als Wärmeträger der Flüssigphasenpyrolyse ein Vakuumgasöl eingesetzt wird.

## Claims

1. A method of pyrolysis of a hydrocarbon-containing solid biomass for obtaining liquid and/or gaseous energy sources in the presence of a heat carrier by heating a mixture of a heat carrier and the biomass to the point of pyrolysis of the biomass, wherein the pyrolysis is performed in the form of a liquid phase pyrolysis and a heavy oil is used as the heat carrier, **characterized in that** the biomass is impregnated with a volatile non-aqueous liquid before it is mixed with the heat carrier, wherein the volatile liquid has a final boiling point (95%) lower than or, at most, equal to the temperature of the pyrolysis step and the pyrolysis is performed at an overpressure of 0.5 bar or less, with a final boiling point (95%) indicating the temperature at which 95% of the volatile liquid has evaporated.

2. A method according to claim 1, **characterized in that** the volatile liquid has a final boiling point (95%) of 380°C or less.

3. A method according to any the preceding claims, **characterized in that** the volatile liquid is a hydrocarbon mixture with a content of aromates of 1% or more.

4. A method according to claim 3, **characterized in that** the volatile liquid is selected from the group consisting of gas oil (LCO/LGO), diesel, petrol and mixtures thereof.

5. A method according to claim 4, **characterized in that** a refinery intermediate is used as the volatile liquid.

6. A method according to any of the preceding claims, **characterized in that** the mass ratio of the volatile liquid to the biomass is 1.5 to 1 or less, preferably 1:1 or less, based on the mass of the dry biomass.

7. A method according to any of the preceding claims, **characterized in that** a vacuum gas oil is used as the heat carrier of the liquid phase pyrolysis.

## Revendications

1. Procédé de pyrolyse de biomasse solide contenant des hydrocarbures pour la production de supports d'énergie liquides et/ou gazeux en présence d'un porteur de chaleur, dans lequel on chauffe un mélange de porteur de chaleur et de la biomasse jusqu'à la pyrolyse de la biomasse, dans lequel on effectue la pyrolyse sous la forme d'une pyrolyse en phase liquide et on utilise comme porteur de chaleur une huile lourde, **caractérisé en ce que** l'on imprègne la biomasse avant le mélange avec le porteur de chaleur avec un liquide non aqueux facilement volatil, dans lequel le liquide facilement volatil présente un point d'ébullition final (95 %) inférieure ou au maximum égale à la température de l'étape de pyrolyse et on exécute la pyrolyse sous une surpression de 0,5 bar ou moins, dans lequel un point d'ébullition final (95 %) indique la température, à laquelle 95 % du liquide facilement volatil sont vaporisés.

2. Procédé selon la revendication 1, **caractérisé en ce que** le liquide facilement volatil présente un point d'ébullition final (95 %) de 380°C ou moins.

3. Procédé selon l'une quelconque des revendications précédentes, **caractérisé en ce que** le liquide facilement volatil est un mélange d'hydrocarbures avec une teneur en aromates de 1 % ou plus.

4. Procédé selon la revendication 3, **caractérisé en ce que** le liquide facilement volatil est choisi dans le groupe composé de gazole (LCO/LGO), diesel, essence ou de mélanges de ceux-là.

5. Procédé selon la revendication 4, **caractérisé en ce que** l'on utilise comme liquide facilement volatil un produit intermédiaire de raffinerie.

6. Procédé selon l'une quelconque des revendications précédentes, **caractérisé en ce que** le rapport massique du liquide facilement volatil à la biomasse vaut 1,5 à 1 ou moins, de préférence 1:1 ou moins, rapporté à la masse de la biomasse sèche.

7. Procédé selon l'une quelconque des revendications précédentes, **caractérisé en ce que** l'on utilise comme porteur de chaleur de la pyrolyse en phase liquide un gazole sous vide.
